(19) Europäisches Patentamt
European Patent Office
Office européen des brevets

(11) **EP 4 147 411 B1**

(12) **EUROPEAN PATENT SPECIFICATION**

(45) Date of publication and mention
of the grant of the patent:
**24.06.2026  Bulletin 2026/26**

(51) International Patent Classification (IPC):
**H04L 5/00** (2006.01)      **H04W 24/10** (2009.01)

(21) Application number: **21805137.3**

(52) Cooperative Patent Classification (CPC):
**H04L 5/0057; H04L 5/0044; H04L 5/0048;
H04L 5/005; H04L 5/0053; H04L 5/0062;
H04L 5/0094;** H04L 5/0007; H04L 5/0023

(22) Date of filing: **08.05.2021**

(86) International application number:
**PCT/CN2021/092304**

(87) International publication number:
**WO 2021/227973 (18.11.2021 Gazette 2021/46)**

(54) **FIELD MAPPING ORDER PER PHYSICAL LAYER CSI REPORT ON PUSCH**

FELDABBILDUNGSREIHENFOLGE PRO CSI-BERICHT DER PHYSIKALISCHEN SCHICHT AUF PUSCH

ORDRE DE MAPPAGE DE CHAMP PAR RAPPORT CSI DE COUCHE PHYSIQUE SUR UN PUSCH

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2020  PCT/CN2020/089417**

(43) Date of publication of application:
**15.03.2023  Bulletin 2023/11**

(73) Proprietor: **QUALCOMM INCORPORATED
San Diego, California 92121-1714 (US)**

(72) Inventors:
• **ZHOU, Yan
San Diego, California 92121-1714 (US)**
• **YUAN, Fang
San Diego, California 92121-1714 (US)**
• **LUO, Tao
San Diego, California 92121-1714 (US)**

(74) Representative: **Jaeger, Michael David
Maucher Jenkins
Seventh Floor Offices
Artillery House
11-19 Artillery Row
London SW1P 1RT (GB)**

(56) References cited:
WO-A1-2018/202216      WO-A1-2019/192013
WO-A1-2019/192013      CN-A- 102 075 293

• **"3rd Generation Partnership Project; Technical
Specification Group Radio Access Network; NR;
Multiplexing and channel coding (Release 16)",
vol. RAN WG1, no. V16.1.0, 3 April 2020
(2020-04-03), pages 1 - 146, XP051893819,
Retrieved from the Internet <URL:ftp://
ftp.3gpp.org/Specs/archive/38_series/38.212/
38212-g10.zip 38212-g10.docx> [retrieved on
20200403]**
• **"3rd Generation Partnership Project; Technical
Specification Group Radio Access Network; NR;
Physical layer procedures for data (Release 16)",
vol. RAN WG1, no. V16.1.0, 3 April 2020
(2020-04-03), pages 1 - 151, XP051893823,
Retrieved from the Internet <URL:ftp://
ftp.3gpp.org/Specs/archive/38_series/38.214/
38214-g10.zip 38214-g10.docx> [retrieved on
20200403]**

- QUALCOMM INCORPORATED: "Remaining Issues on CSI Reporting", vol. RAN WG1, no. Vancouver, Canada; 20180122 - 20180126, 13 January 2018 (2018-01-13), XP051385130, Retrieved from the Internet <URL:http://www.3gpp.org/ftp/tsg%5Fran/WG1%5FRL1/TSGR1%5FAH/NR%5FAH%5F1801/Docs/> [retrieved on 20180113]

- INTEL CORPORATION: "Miscellaneous aspects of Polar coding", 3GPP DRAFT; R1-1800344, vol. RAN WG1, 13 January 2018 (2018-01-13), Vancouver, Canada, pages 1 - 6, XP051384803

## Description

### PRIORITY CLAIM(S)

This application claims benefit of and priority to PCT Application No. PCT/CN2020/089417, filed on May 9, 2020.

### INTRODUCTION

Aspects of the present disclosure relate to wireless communications, and more particularly, to techniques for determining a field mapping order for physical layer (PHY/L1) channel state information (CSI) reports sent on a physical uplink shared channel (PUSCH).

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

In some examples, a wireless multiple-access communication system may include a number of base stations (BSs), which are each capable of simultaneously supporting communication for multiple communication devices, otherwise known as user equipments (UEs). In an LTE or LTE-A network, a set of one or more base stations may define an eNodeB (eNB). In other examples (e.g., in a next generation, a new radio (NR), or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., which may be referred to as a base station, 5G NB, next generation NodeB (gNB or gNodeB), TRP, etc.). A base station or distributed unit may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. New Radio (NR) (e.g., 5G) is an example of an emerging telecommunication standard. NR is a set of enhancements to the LTE mobile standard promulgated by 3GPP. It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation. Relevant aspects regarding determining a field mapping order for physical layer channel state information (CSI) reports are described in Third Generation Partnership Project (3GPP) technical standard TS 38.212, as discussed later in this application.

However, as the demand for mobile broadband access continues to increase, there exists a need for further improvements in NR and LTE technology. Preferably, these improvements should be applicable to other multi-access technologies and the telecommunication standards that employ these technologies.

### BRIEF SUMMARY

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include improved communications between access points and stations in a wireless network.

Certain aspects of the present disclosure provide a method for wireless communications by a user equipment (UE). The method generally includes measuring one or more metrics to be reported in one or more physical layer channel state information (CSI) reports, wherein each physical layer CSI report has a single part, determining a field mapping order per physical layer CSI report, wherein the field mapping order is the same as a field mapping order used for physical layer CSI reports transmitted via a physical uplink control channel, PUCCH, and transmitting the physical layer CSI reports via a physical uplink shared channel (PUSCH), with the one or more metrics in CSI fields occurring in accordance with the determined field mapping order.

Certain aspects of the present disclosure are directed to an apparatus for wireless communication by a UE. The apparatus generally includes a memory and at least one processor coupled to the memory, the memory and the at least one processor being configured to measure one or more metrics to be reported in one or more physical layer CSI reports, wherein each physical layer CSI report has a single part, determine a field mapping order per physical layer CSI report, wherein the field mapping order is the same as a field mapping order used for physical layer CSI reports transmitted via a physical uplink control channel, PUCCH, and a transmitter configured to transmit the physical layer CSI reports via a PUSCH, with the one or more metrics in CSI fields occurring in accordance with the determined field mapping order.

Certain aspects of the present disclosure provide a method for wireless communications by a network entity. The method generally includes receiving, from a UE, one or more physical layer CSI reports with one or more metrics via a physical uplink shared channel, PUSCH, wherein each physical layer CSI report has a single part, determining a field mapping order per physical layer CSI report, wherein the field mapping order is the same as a field mapping order used for physical layer CSI reports transmitted via a physical uplink control channel, PUCCH, and processing the one or more metrics in CSI fields occurring in accordance with the determined field mapping order.

Certain aspects of the present disclosure are directed to an apparatus for wireless communication by a network entity. The apparatus generally includes at least one receiver configured to receive, from a UE, one or more physical layer CSI reports with one or more metrics via a physical uplink shared channel, PUSCH, wherein each physical layer CSI report has a single part, and at least one processor configured to determine a field mapping order per physical layer CSI report, wherein the field mapping order is the same as a field mapping order used for physical layer CSI reports transmitted via a physical uplink control channel, PUCCH, and process the one or more metrics in CSI fields occurring in accordance with the determined field mapping order.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

**BRIEF DESCRIPTION OF THE DRAWINGS**

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain typical aspects of this disclosure and are therefore not to be considered limiting of its scope, for the description may admit to other equally effective aspects.

**FIG. 1** is a block diagram conceptually illustrating an example telecommunications system, in accordance with certain aspects of the present disclosure.

**FIG. 2** is a block diagram illustrating an example logical architecture of a distributed radio access network (RAN), in accordance with certain aspects of the present disclosure.

**FIG. 3** is a diagram illustrating an example physical architecture of a distributed RAN, in accordance with certain aspects of the present disclosure.

**FIG. 4** is a block diagram conceptually illustrating a design of an example base station (BS) and user equipment (UE), in accordance with certain aspects of the present disclosure.

**FIG. 5** is a diagram showing examples for implementing a communication protocol stack, in accordance with certain aspects of the present disclosure.

**FIG. 6** illustrates an example of a frame format for a new radio (NR) system, in accordance with certain aspects of the present disclosure.

**FIG. 7** illustrates how different synchronization signal blocks (SSBs) may be sent using different beams, in accordance with certain aspects of the present disclosure.

**FIG. 8** shows an exemplary transmission resource mapping, according to aspects of the present disclosure.

**FIG. 9** illustrates example quasi co-location (QCL) relationships, in accordance with certain aspects of the present disclosure.

**FIG. 10** illustrates example operations for wireless communications by a user equipment (UE), in accordance with certain aspects of the present disclosure.

**FIG. 11** illustrates an example operations for wireless communications by a network entity, in accordance with certain aspects of the present disclosure.

**FIGs. 12A-12C** illustrate example field mapping for a physical layer CSI report sent on PUSCH, in accordance with certain aspects of the present disclosure.

**FIGs. 13-14** illustrate example communications devices that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

## DETAILED DESCRIPTION

Aspects of the present disclosure relate to wireless communications, and more particularly, to techniques for determining a field mapping order for physical layer (PHY/L1) channel state information (CSI) reports sent on a physical uplink shared channel (PUSCH).

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

The techniques described herein may be used for various wireless communication technologies, such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS).

New Radio (NR) is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5G and later, including NR technologies.

NR access (e.g., 5G technology) may support various wireless communication services, such as enhanced mobile broadband (eMBB) targeting wide bandwidth (e.g., 80 MHz or beyond), millimeter wave (mmW) targeting high carrier frequency (e.g., 25 GHz or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe.

*Example Wireless Communications System*

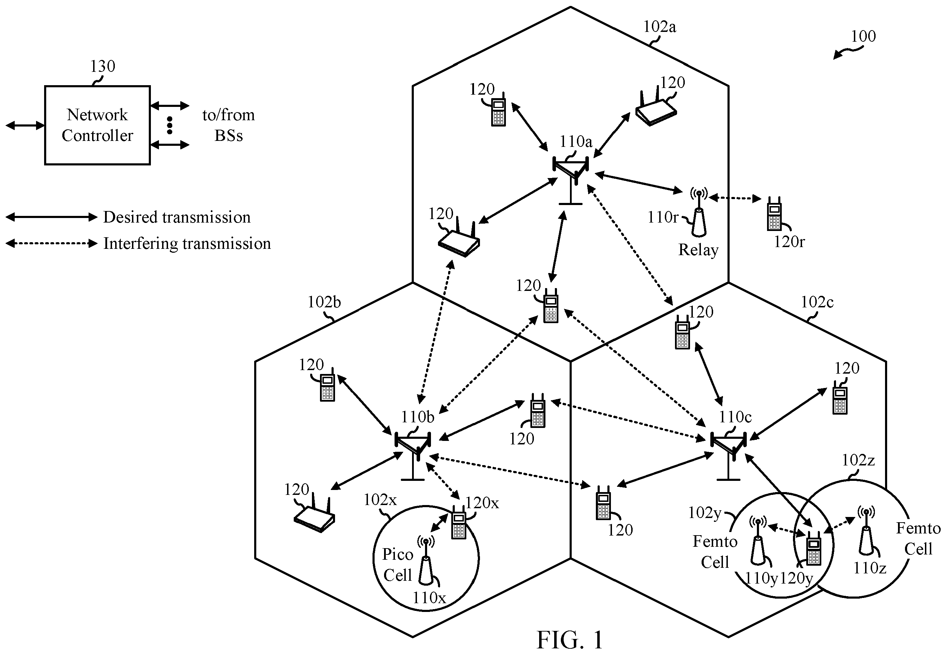

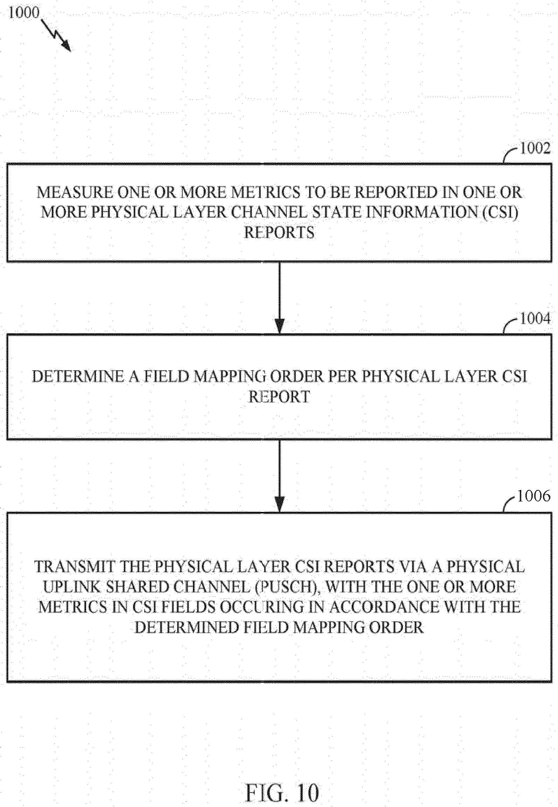

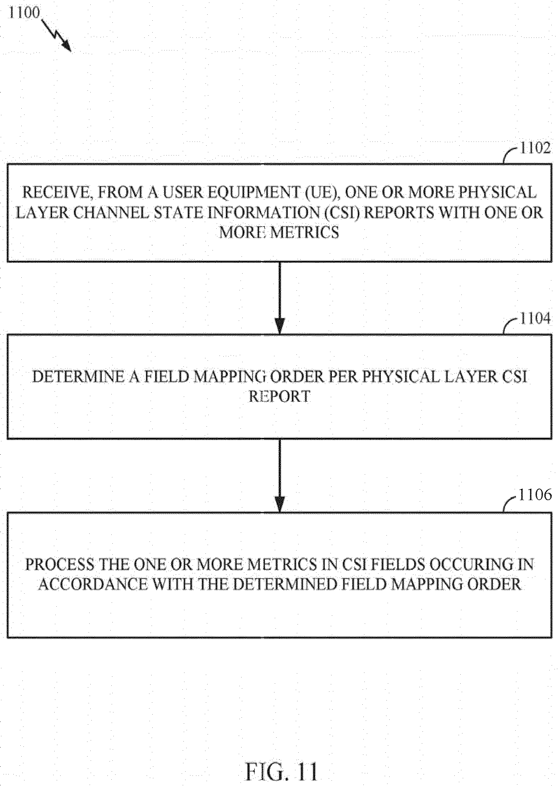

**FIG. 1** illustrates an example wireless communication network 100 (e.g., a new radio (NR) and/or fifth generation (5G) network), in which aspects of the present disclosure may be performed. For example, the wireless network 100 may include a user equipment (UE) 120 configured to perform operations 1000 of **FIG. 10** to send one or more physical layer channel state information (CSI) (e.g., physical layer (PHY/L1) signal to interference and noise ratio (SINR)) reports with a field mapping order determined, in accordance with aspects of the present disclosure. Similarly, the wireless network 100 may include a base station 110 configured to perform operations 1100 of **FIG. 11** to receive and process one or more physical layer CSI reports, sent from a UE (e.g., performing operations 1000 of **FIG. 10**) with a field mapping order determined, in accordance with aspects of the present disclosure.

As illustrated in **FIG. 1,** the wireless network 100 may include a number of base stations (BSs) 110 and other network entities. A BS may be a station that communicates with UEs. Each BS 110 may provide communication coverage for a particular geographic area. In 3GPP, the term "cell" can refer to a coverage area of a NodeB (NB) and/or a NodeB subsystem serving this coverage area, depending on the context in which the term is used. In NR systems, the term "cell" and next generation NodeB (gNB), NR BS, 5G NB, access point (AP), or transmission reception point (TRP) may be interchangeable. In some examples, a cell may not necessarily be stationary, and the geographic area of the cell may move according to the location of a mobile BS. In some examples, the base stations may be interconnected to one another and/or to one or more other base stations or network nodes (not shown) in wireless communication network 100 through various types of backhaul interfaces, such as a direct physical connection, a wireless connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area to avoid interference between wireless networks of different RATs. In some cases, NR or 5G RAT networks may be deployed.

A BS may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS. In the example shown in **FIG. 1,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple (e.g., three) cells.

Wireless communication network 100 may also include relay stations. A relay station is a station that receives a transmission of data and/or other information from an upstream station (e.g., a BS or a UE) and sends a transmission of the data and/or other information to a downstream station (e.g., a UE or a BS). A relay station may also be a UE that relays transmissions for other UEs. In the example shown in **FIG. 1,** a relay station 110r may communicate with the BS 110a and a UE 120r to facilitate communication between the BS 110a and the UE 120r. A relay station may also be referred to as a relay BS, a relay, etc.

Wireless network 100 may be a heterogeneous network that includes BSs of different types, e.g., macro BS, pico BS, femto BS, relays, etc. These different types of BSs may have different transmit power levels, different coverage areas, and different impact on interference in the wireless network 100. For example, macro BS may have a high transmit power level (e.g., 20 Watts) whereas pico BS, femto BS, and relays may have a lower transmit power level (e.g., 1 Watt).

Wireless communication network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time. The techniques described herein may be used for both synchronous and asynchronous operation.

A network controller 130 may couple to a set of BSs and provide coordination and control for these BSs. The network controller 130 may communicate with the BSs 110 via a backhaul. The BSs 110 may also communicate with one another (e.g., directly or indirectly) via wireless or wireline backhaul.

The UEs 120 (e.g., 120x, 120y, etc.) may be dispersed throughout the wireless network 100, and each UE may be stationary or mobile. A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, gaming device, reality augmentation device (augmented reality (AR), extended reality (XR), or virtual reality (VR)), or any other suitable device that is configured to communicate via a wireless or wired medium.

Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.8 MHz (i.e., 6 resource blocks), and there may be 1, 2, 4, 8, or 16 subbands for system bandwidth of 1.25, 2.5, 5, 10 or 20 MHz, respectively.

While aspects of the examples described herein may be associated with LTE technologies, aspects of the present disclosure may be applicable with other wireless communications systems, such as NR. NR may utilize OFDM with a CP on the uplink and downlink and include support for half-duplex operation using TDD. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

In some scenarios, air interface access may be scheduled. For example, a scheduling entity (e.g., a base station (BS), Node B, eNB, gNB, or the like) can allocate resources for communication among some or all devices and equipment within its service area or cell. The scheduling entity may be responsible for scheduling, assigning, reconfiguring, and releasing resources for one or more subordinate entities. That is, for scheduled communication, subordinate entities can utilize resources allocated by one or more scheduling entities.

Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

Turning back to **FIG. 1,** this figure illustrates a variety of potential deployments for various deployment scenarios. For example, in **FIG. 1,** a solid line with double arrows indicates desired transmissions between a UE and a serving BS, which is a BS designated to serve the UE on the downlink and/or uplink. A finely dashed line with double arrows indicates interfering transmissions between a UE and a BS. Other lines show component to component (e.g., UE to UE) communication options.

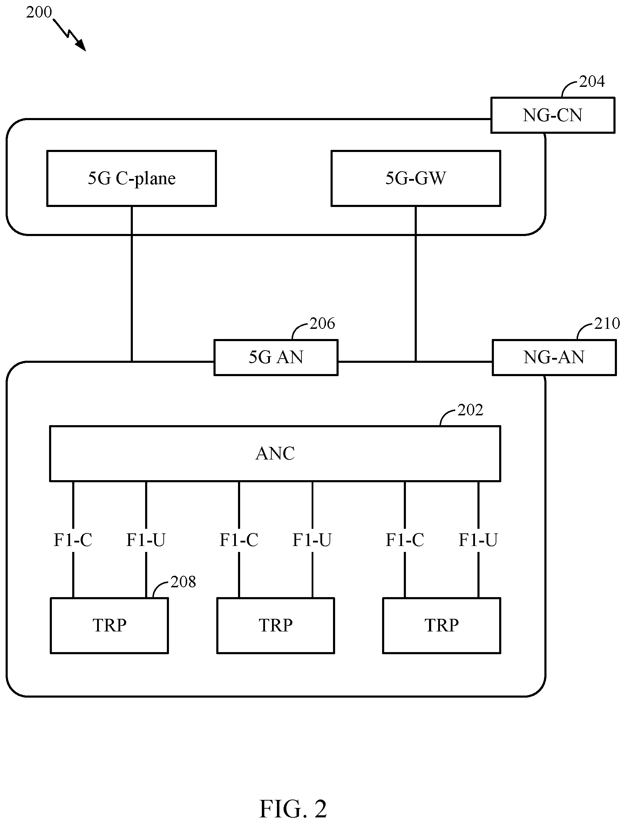

**FIG. 2** illustrates an example logical architecture of a distributed Radio Access Network (RAN) 200, which may be implemented in the wireless communication network 100 illustrated in **FIG. 1.** A 5G access node 206 may include an access node controller (ANC) 202. ANC 202 may be a central unit (CU) of the distributed RAN 200. The backhaul interface to the Next Generation Core Network (NG-CN) 204 may terminate at ANC 202. The backhaul interface to neighboring next generation access Nodes (NG-ANs) 210 may terminate at ANC 202. ANC 202 may include one or more transmission reception points (TRPs) 208 (e.g., cells, BSs, gNBs, etc.).

The TRPs 208 may be a distributed unit (DU). TRPs 208 may be connected to a single ANC (e.g., ANC 202) or more than one ANC (not illustrated). For example, for RAN sharing, radio as a service (RaaS), and service specific ANC deployments, TRPs 208 may be connected to more than one ANC. TRPs 208 may each include one or more antenna ports. TRPs 208 may be configured to individually (e.g., dynamic selection) or jointly (e.g., joint transmission) serve traffic to a UE.

The logical architecture of distributed RAN 200 may support various backhauling and fronthauling solutions. This support may occur via and across different deployment types. For example, the logical architecture may be based on transmit network capabilities (e.g., bandwidth, latency, and/or jitter).

The logical architecture of distributed RAN 200 may share features and/or components with LTE. For example, next generation access node (NG-AN) 210 may support dual connectivity with NR and may share a common fronthaul for LTE and NR.

The logical architecture of distributed RAN 200 may enable cooperation between and among TRPs 208, for example, within a TRP and/or across TRPs via ANC 202. An inter-TRP interface may not be used.

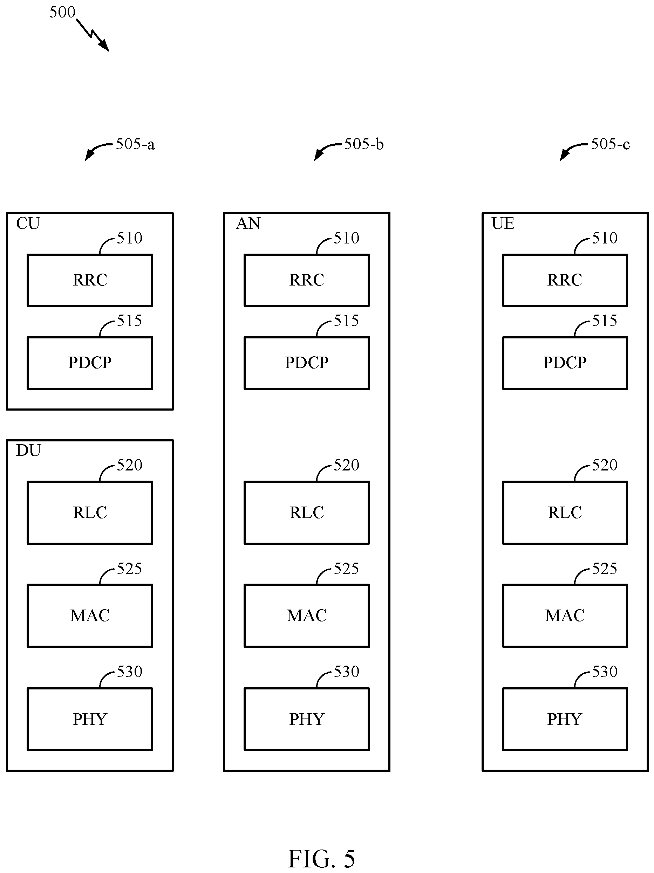

Logical functions may be dynamically distributed in the logical architecture of distributed RAN 200. As will be described in more detail with reference to **FIG. 5,** the Radio Resource Control (RRC) layer, Packet Data Convergence Protocol (PDCP) layer, Radio Link Control (RLC) layer, Medium Access Control (MAC) layer, and a Physical (PHY) layers may be adaptably placed at the DU (e.g., TRP 208) or CU (e.g., ANC 202).

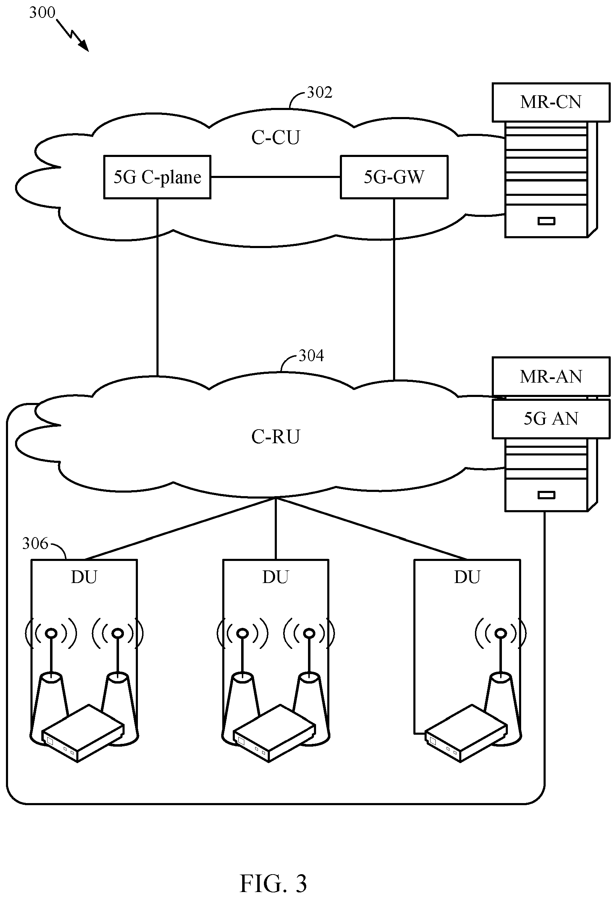

**FIG. 3** illustrates an example physical architecture of a distributed Radio Access Network (RAN) 300, according to aspects of the present disclosure. A centralized core network unit (C-CU) 302 may host core network functions. C-CU 302 may be centrally deployed. C-CU 302 functionality may be offloaded (e.g., to advanced wireless services (AWS)), in an effort to handle peak capacity.

A centralized RAN unit (C-RU) 304 may host one or more ANC functions. Optionally, the C-RU 304 may host core network functions locally. The C-RU 304 may have distributed deployment. The C-RU 304 may be close to the network edge.

A DU 306 may host one or more TRPs (Edge Node (EN), an Edge Unit (EU), a Radio Head (RH), a Smart Radio Head (SRH), or the like). The DU may be located at edges of the network with radio frequency (RF) functionality.

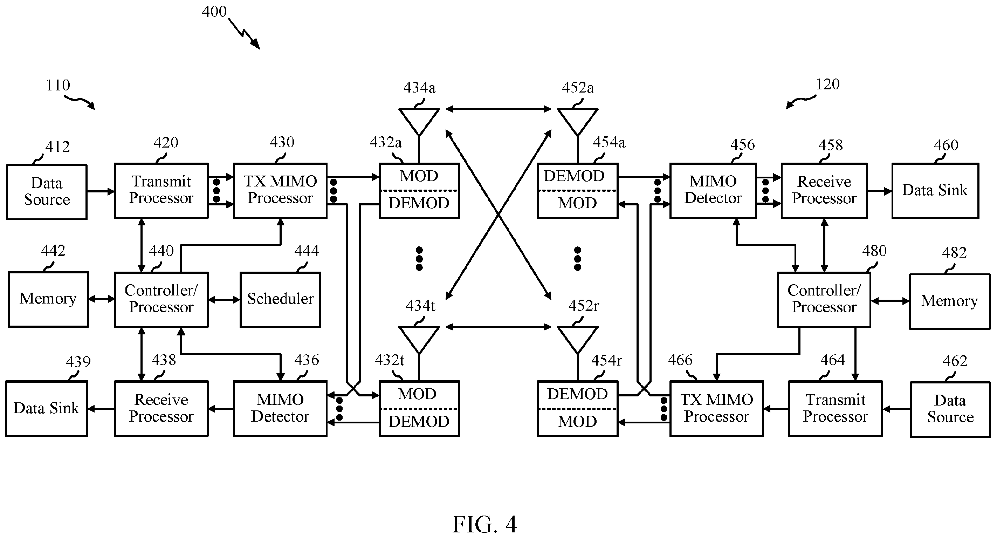

**FIG. 4** illustrates example components of BS 110 and UE 120 (as depicted in **FIG. 1**), which may be used to implement aspects of the present disclosure. For example, antennas 452, processors 466, 458, 464, and/or controller/processor 480 of the UE 120 may be used to perform operations 1000 of **FIG. 10,** while antennas 434, processors 420, 460, 438, and/or controller/processor 440 of the BS 110 may be used to perform operations 1100 of **FIG. 11.**

At the BS 110, a transmit processor 420 may receive data from a data source 412 and control information from a controller/processor 440. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. The processor 420 may process (e.g., encode and symbol map) the data and control information to obtain data symbols and control symbols, respectively. The processor 420 may also generate reference symbols, e.g., for the primary synchronization signal (PSS), secondary synchronization signal (SSS), and cell-specific reference signal (CRS). A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. Each modulator 432 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, antennas 452a through 452r may receive downlink signals from the base station 110 and may provide received signals to demodulators (DEMODs) in transceivers 454a through 454r, respectively. Each demodulator 454 may condition (e.g., filter, amplify, down convert, and digitize) a respective received signal to obtain input samples. Each demodulator may further process input samples (e.g., for OFDM, etc.) to obtain received symbols. A MIMO detector 456 may obtain received symbols from all demodulators 454a through 454r, perform MIMO detection on the received symbols if applicable, and provide detected symbols. A receive processor 458 may process (e.g., demodulate, deinterleave, and decode) the detected symbols, provide decoded data for the UE 120 to a data sink 460, and provide decoded control information to a controller/processor 480.

On the uplink, at UE 120, a transmit processor 464 may receive and process data (e.g., for the physical uplink shared channel (PUSCH)) from a data source 462 and control information (e.g., for the physical uplink control channel (PUCCH) from the controller/processor 480. The transmit processor 464 may also generate reference symbols for a reference signal (e.g., for the sounding reference signal (SRS)). The symbols from the transmit processor 464 may be precoded by a TX MIMO processor 466 if applicable, further processed by the demodulators in transceivers 454a through 454r (e.g., for SC-FDM, etc.), and transmitted to the base station 110. At the BS 110, uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

The controllers/processors 440 and 480 may direct operations at the base station 110 and the UE 120, respectively. The processor 440 and/or other processors and modules at the BS 110 may perform or direct execution of processes for techniques described herein. The memories 442 and 482 may store data and program codes for BS 110 and UE 120, respectively. A scheduler 444 may schedule UEs for data transmission on the downlink and/or uplink.

**FIG. 5** illustrates a diagram 500 showing examples for implementing a communications protocol stack, according to aspects of the present disclosure. The illustrated communications protocol stacks may be implemented by devices operating in a wireless communication system, such as a 5G system (e.g., a system that supports uplink-based mobility). Diagram 500 illustrates a communications protocol stack including a Radio Resource Control (RRC) layer 510, a Packet Data Convergence Protocol (PDCP) layer 515, a Radio Link Control (RLC) layer 520, a Medium Access Control (MAC) layer 525, and a Physical (PHY) layer 530. In various examples, the layers of a protocol stack may be implemented as separate modules of software, portions of a processor or ASIC, portions of non-collocated devices connected by a communications link, or various combinations thereof. Collocated and non-collocated implementations may be used, for example, in a protocol stack for a network access device (e.g., ANs, CUs, and/or DUs) or a UE.

A first option 505-a shows a split implementation of a protocol stack, in which implementation of the protocol stack is split between a centralized network access device (e.g., an ANC 202 in **FIG. 2**) and distributed network access device (e.g., DU 208 in **FIG. 2**). In the first option 505-a, an RRC layer 510 and a PDCP layer 515 may be implemented by the central unit, and an RLC layer 520, a MAC layer 525, and a PHY layer 530 may be implemented by the DU. In various examples the CU and the DU may be collocated or non-collocated. The first option 505-a may be useful in a macro cell, micro cell, or pico cell deployment.

A second option 505-b shows a unified implementation of a protocol stack, in which the protocol stack is implemented in a single network access device. In the second option, RRC layer 510, PDCP layer 515, RLC layer 520, MAC layer 525, and PHY layer 530 may each be implemented by the AN. The second option 505-b may be useful in, for example, a femto cell deployment.

Regardless of whether a network access device implements part or all of a protocol stack, a UE may implement an entire protocol stack as shown in 505-c (e.g., the RRC layer 510, the PDCP layer 515, the RLC layer 520, the MAC layer 525, and the PHY layer 530).

Embodiments discussed herein may include a variety of spacing and timing deployments. For example, in LTE, the basic transmission time interval (TTI) or packet duration is the 1 ms subframe. In NR, a subframe is still 1 ms, but the basic TTI is referred to as a slot. A subframe contains a variable number of slots (e.g., 1, 2, 4, 8, 16, slots) depending on the subcarrier spacing. The NR RB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing.

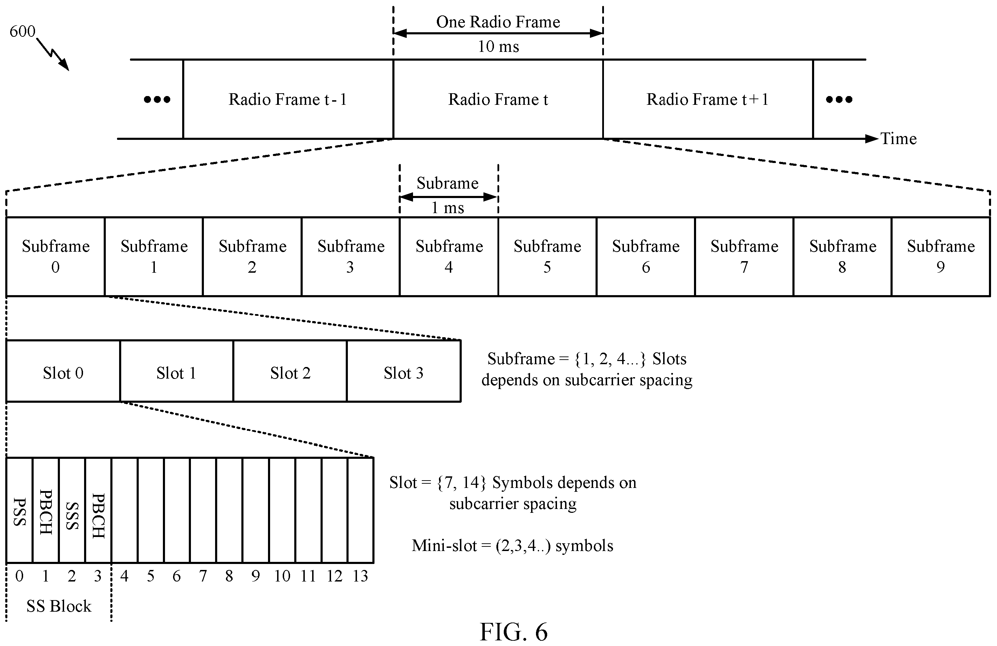

**FIG. 6** is a diagram showing an example of a frame format 600 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot is a subslot structure (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block (SSB) is transmitted. The SS block includes a PSS, a SSS, and a two symbol PBCH. The SS block can be transmitted in a fixed slot location, such as the symbols 0-3 as shown in **FIG. 6.** The PSS and SSS may be used by UEs for cell search and acquisition. The PSS may provide half-frame timing, and the SS may provide the CP length and frame timing. The PSS and SSS may provide the cell identity. The PBCH carries some basic system information, such as downlink system bandwidth, timing information within radio frame, SS burst set periodicity, system frame number, etc.

Further system information such as, remaining minimum system information (RMSI), system information blocks (SIBs), other system information (OSI) can be transmitted on a physical downlink shared channel (PDSCH) in certain subframes.

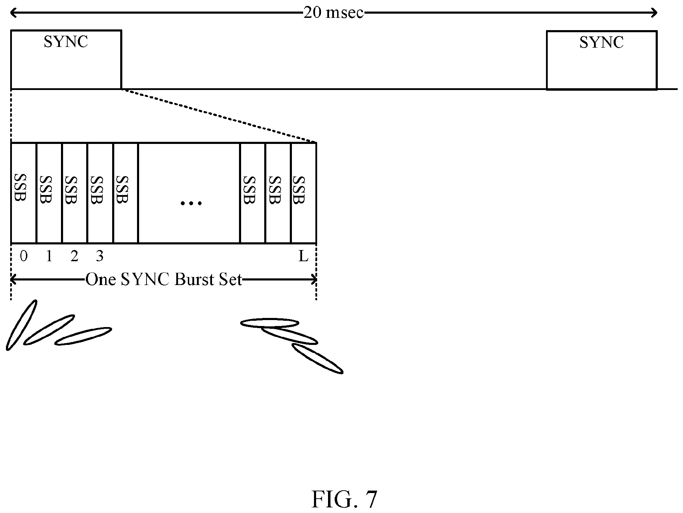

As shown in **FIG. 7,** the SS blocks may be organized into SS burst sets to support beam sweeping. As shown, each SSB within a burst set may be transmitted using a different beam, which may help a UE quickly acquire both transmit (Tx) and receive (Rx) beams (particular for mmW applications). A physical cell identity (PCI) may still decoded from the PSS and SSS of the SSB.

Certain deployment scenarios may include one or both NR deployment options. Some may be configured for non-standalone (NSA) and/or standalone (SA) option. A standalone cell may need to broadcast both SSB and remaining minimum system information (RMSI), for example, with SIB1 and SIB2. A non-standalone cell may only need to broadcast SSB, without broadcasting RMSI. In a single carrier in NR, multiple SSBs may be sent in different frequencies, and may include the different types of SSB.

*Control Resource Sets (CORESETs)*

A control resource set (CORESET) for an OFDMA system (e.g., a communications system transmitting PDCCH using OFDMA waveforms) may comprise one or more control resource (e.g., time and frequency resources) sets, configured for conveying PDCCH, within the system bandwidth. Within each CORESET, one or more search spaces (e.g., common search space (CSS), UE-specific search space (USS), etc.) may be defined for a given UE. Search spaces are generally areas or portions where a communication device (e.g., a UE) may look for control information.

According to aspects of the present disclosure, a CORESET is a set of time and frequency domain resources, defined in units of resource element groups (REGs). Each REG may comprise a fixed number (e.g., twelve) tones in one symbol period (e.g., a symbol period of a slot), where one tone in one symbol period is referred to as a resource element (RE). A fixed number of REGs may be included in a control channel element (CCE). Sets of CCEs may be used to transmit new radio PDCCHs (NR-PDCCHs), with different numbers of CCEs in the sets used to transmit NR-PDCCHs using differing aggregation levels. Multiple sets of CCEs may be defined as search spaces for UEs, and thus a NodeB or other base station may transmit an NR-PDCCH to a UE by transmitting the NR-PDCCH in a set of CCEs that is defined as a decoding candidate within a search space for the UE, and the UE may receive the NR-PDCCH by searching in search spaces for the UE and decoding the NR-PDCCH transmitted by the NodeB.

Operating characteristics of a NodeB or other base station in an NR communications system may be dependent on a frequency range (FR) in which the system operates. A frequency range may comprise one or more operating bands (e.g., "n1" band, "n2" band, "n7" band, and "n41" band), and a communications system (e.g., one or more eNBs and UEs) may operate in one or more operating bands. Frequency ranges and operating bands are described in more detail in "Base Station (BS) radio transmission and reception" TS38.104 (Release 15), which is available from the 3GPP website.

As described above, a CORESET is a set of time and frequency domain resources. The CORESET can be configured for conveying PDCCH within system bandwidth. A UE may determine a CORESET and monitors the CORESET for control channels. During initial access, a UE may identify an initial CORESET (CORESET #0) configuration from a field (e.g., pdcchConfig-SIB1) in a master information block (MIB). This initial CORESET may then be used to configure the UE (e.g., with other CORESETs and/or bandwidth parts via dedicated (UE-specific) signaling. When the UE detects a control channel in the CORESET, the UE attempts to decode the control channel and communicates with the transmitting BS (e.g., the transmitting cell) according to the control data provided in the control channel (e.g., transmitted via the CORESET).

According to aspects of the present disclosure, when a UE is connected to a cell (or BS), the UE may receive a master information block (MIB). The MIB can be in a synchronization signal and physical broadcast channel (SS/PBCH) block (e.g., in the PBCH of the SS/PBCH block) on a synchronization raster (sync raster). In some scenarios, the sync raster may correspond to an SSB. From the frequency of the sync raster, the UE may determine an operating band of the cell. Based on a cell's operation band, the UE may determine a minimum channel bandwidth and a subcarrier spacing (SCS) of the channel. The UE may then determine an index from the MIB (e.g., four bits in the MIB, conveying an index in a range 0-15).

Given this index, the UE may look up or locate a CORESET configuration (this initial CORESET configured via the MIB is generally referred to as CORESET #0). This may be accomplished from one or more tables of CORESET configurations. These configurations (including single table scenarios) may include various subsets of indices indicating valid CORESET configurations for various combinations of minimum channel bandwidth and SCS. In some arrangements, each combination of minimum channel bandwidth and SCS may be mapped to a subset of indices in the table.

Alternatively or additionally, the UE may select a search space CORESET configuration table from several tables of CORESET configurations. These configurations can be based on a minimum channel bandwidth and SCS. The UE may then look up a CORESET configuration (e.g., a Type0-PDCCH search space CORESET configuration) from the selected table, based on the index. After determining the CORESET configuration (e.g., from the single table or the selected table), the UE may then determine the CORESET to be monitored (as mentioned above) based on the location (in time and frequency) of the SS/PBCH block and the CORESET configuration.

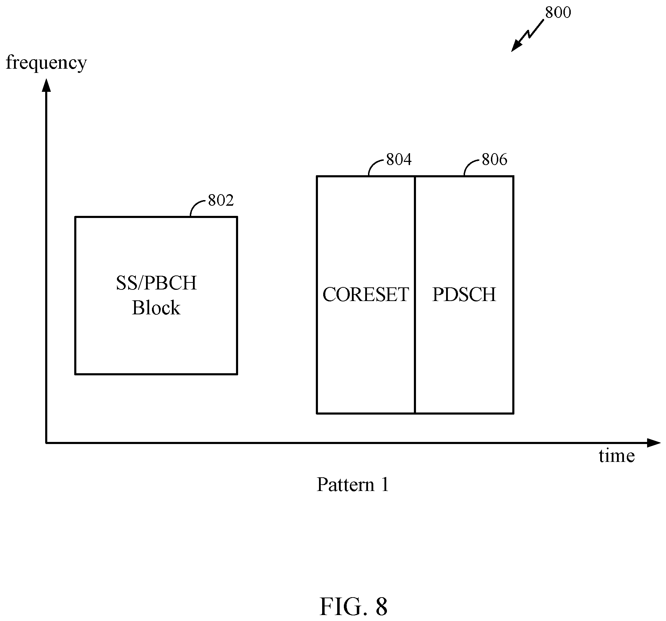

FIG. 8 shows an exemplary transmission resource mapping 800, according to aspects of the present disclosure. In the exemplary mapping, a BS (e.g., BS 110a, shown in FIG. 1) transmits an SS/PBCH block 802. The SS/PBCH block includes a MIB conveying an index to a table that relates the time and frequency resources of the CORESET 804 to the time and frequency resources of the SS/PBCH block.

The BS may also transmit control signaling. In some scenarios, the BS may also transmit a PDCCH to a UE (e.g., UE 120, shown in FIG. 1) in the (time/frequency resources of the) CORESET. The PDCCH may schedule a PDSCH 806. The BS then transmits the PDSCH to the UE. The UE may receive the MIB in the SS/PBCH block, determine the index, look up a CORESET configuration based on the index, and determine the CORESET from the CORESET configuration and the SS/PBCH block. The UE may then monitor the CORESET, decode the PDCCH in the CORESET, and receive the PDSCH that was allocated by the PDCCH.

Different CORESET configurations may have different parameters that define a corresponding CORESET. For example, each configuration may indicate a number of resource blocks (e.g., 24, 48, or 96), a number of symbols (e.g., 1-3), as well as an offset (e.g., 0-38 RBs) that indicates a location in frequency.

*QCL port and TCI States*

In many cases, it is important for a user equipment (UE) to know which assumptions it can make on a channel corresponding to different transmissions. For example, the UE may need to know which reference signals it can use to estimate the channel in order to decode a transmitted signal (e.g., PDCCH or PDSCH). It may also be important for the UE to be able to report relevant channel state information (CSI) to the BS (gNB) for scheduling, link adaptation, and/or beam management purposes. In NR, the concept of quasi co-location (QCL) and transmission configuration indicator (TCI) states is used to convey information about these assumptions.

QCL assumptions are generally defined in terms of channel properties. Per 3GPP TS 38.214, "two antenna ports are said to be quasi-co-located if properties of the channel over which a symbol on one antenna port is conveyed can be inferred from the channel over which a symbol on the other antenna port is conveyed." Different reference signals may be considered quasi co-located ("QCL'd") if a receiver (e.g., a UE) can apply channel properties determined by detecting a first reference signal to help detect a second reference signal. TCI states generally include configurations such as QCL-relationships, for example, between the DL RSs in one CSI-RS set and the PDSCH DMRS ports.

In some cases, a UE may be configured with up to M *TCI-States.* Configuration of the M *TCI-States* can come about via higher layer signalling, while a UE may be signalled to decode PDSCH according to a detected PDCCH with DCI indicating one of the TCI states. Each configured TCI state may include one RS set *TCI-RS-SetConfig* that indicates different QCL assumptions between certain source and target signals.

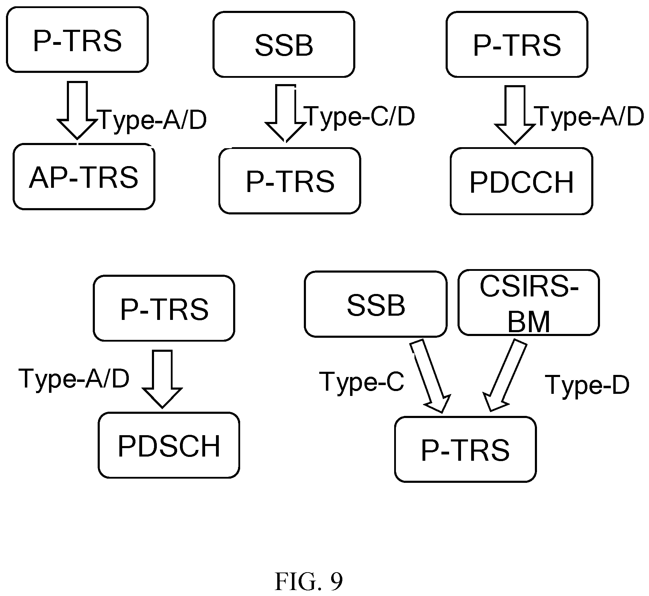

**FIG. 9** illustrate examples of the association of DL reference signals with corresponding QCL types that may be indicated by a *TCI-RS-SetConfig.*

In the examples of **FIG. 9,** a source reference signal (RS) is indicated in the top block and is associated with a target signal indicated in the bottom block. In this context, a target signal generally refers to a signal for which channel properties may be inferred by measuring those channel properties for an associated source signal. As noted above, a UE may use the source RS to determine various channel parameters, depending on the associated QCL type, and use those various channel properties (determined based on the source RS) to process the target signal. A target RS does not necessarily need to be PDSCH's DMRS, rather it can be any other RS: PUSCH demodulated reference signal (DMRS), CSI-RS, tracking RS (TRS), and sounding RS (SRS).

As illustrated, each *TCI-RS-SetConfig* contains parameters. These parameters can, for example, configure quasi co-location relationship(s) between reference signals in the RS set and the DM-RS port group of the PDSCH. The RS set contains a reference to either one or two DL RSs and an associated quasi co-location type (QCL-Type) for each one configured by the higher layer parameter *QCL-Type.*

As illustrated in **FIG. 9,** for the case of two DL RSs, the QCL types can take on a variety of arrangements. For example, QCL types may not be the same, regardless of whether the references are to the same DL RS or different DL RSs. In the illustrated example, SSB is associated with Type C QCL for P-TRS, while CSI-RS for beam management (CSIRS-BM) is associated with Type D QCL.

QCL information and/or types may in some scenarios depend on or be a function of other information. For example, the QCL types indicated to the UE can be based on higher layer parameter *QCL-Type* and may take one or a combination of the following types:

QCL-TypeA: {Doppler shift, Doppler spread, average delay, delay spread},

QCL-TypeB: {Doppler shift, Doppler spread},

QCL-TypeC: {average delay, Doppler shift}, and

QCL-TypeD: {Spatial Rx parameter},

Spatial QCL assumptions (QCL-TypeD) may be used to help a UE to select an analog Rx beam (e.g., during beam management procedures). For example, an SSB resource indicator may indicate a same beam for a previous reference signal should be used for a subsequent transmission.

An initial CORESET (e.g., CORESET ID 0 or simply CORESET#0) in NR may be identified during initial access by a UE (e.g., via a field in the MIB). A CORSET information element (CORESET IE) sent via radio resource control (RRC) signaling may convey information regarding a CORESET configured for a UE. The CORESET IE generally includes a CORESET ID, an indication of frequency domain resources (e.g., number of RBs) assigned to the CORESET, contiguous time duration of the CORESET in a number of symbols, and Transmission Configuration Indicator (TCI) states.

As noted above, a subset of the TCI states provide QCL relationships between DL RS(s) in one RS set (e.g., TCI-Set) and PDCCH demodulation RS (DMRS) ports. A particular TCI state for a given UE (e.g., for unicast PDCCH) may be conveyed to the UE by the Medium Access Control (MAC) Control Element (MAC-CE). The particular TCI state is generally selected from the set of TCI states conveyed by the CORESET IE, with the initial CORESET (CORESET#0) generally configured via MIB.

Search space information may also be provided via RRC signaling. For example, the SearchSpace IE is another RRC IE that defines how and where to search for PDCCH candidates for a given CORESET. Each search space is associated with one CORESET. The SearchSpace IE identifies a search space configured for a CORESET by a search space ID. In an aspect, the search space ID associated with CORESET # 0 is SearchSpace ID #0. The search space is generally configured via PBCH (MIB).

*Example Field Mapping Order per L1-SINR Report on PUSCH*

Aspects of the present disclosure relate to wireless communications, and more particularly, to techniques for determining a field mapping order for physical layer (PHY/L1) channel state information (CSI) reports sent on a physical uplink shared channel (PUSCH).

There are several types of CSI in new radio (NR). For example, the following are types of CSI in NR include:

CQI (Channel Quality Information);

PMI (Precoding Matrix Indicator);

CRI (CSI-RS Resource Indicator);

SSBRI (SS/PBCH Resource Block Indicator);

LI (Layer Indicator);

RI (Rank Indicator); and/or

L1-RSRP.

Physical layer parameters for signal generation and resource element mapping for the CSI related reference signal is configured by various RRC parameters. The physical layer parameter set is configured and stored. A CSI Resource configuration specifies on what type of reference signal (e.g., nzp-CSI-RS-SSB, csi-IM-Resource) the measurement is based, and also specifies the types of the resources (e.g., as periodic, aperiodic, or semi persistent). A CSI Report Configuration specifies which CSI Resource Configuration to be used for the measurement.

In 3GPP NR systems, to support L1 signal to interference and noise ratio (SINR) reporting on a PUSCH, a field mapping order per L1-SINR report on PUSCH should be specified. Accordingly, aspects of the present disclosure provide a mechanism for a field mapping order for PHY/L1 CSI reports sent on a PUSCH.

FIG. 10 illustrates example operations 1000 for wireless communications by a UE, in accordance with certain aspects of the present disclosure. For example, operations 1000 may be performed by a UE 120 of FIG. 1 to perform a beam switch and apply a beam switch interruption time.

Operations 1000 begin, at 1002, by measuring one or more metrics to be reported in one or more physical layer CSI reports. For example, the metrics may include at least one of a CSI reference signal (CSI-RS) resource indicator (CRI), a synchronization signal/physical broadcast channel (SS/PBCH) resource block indicator (SSBRI), or a SINR.

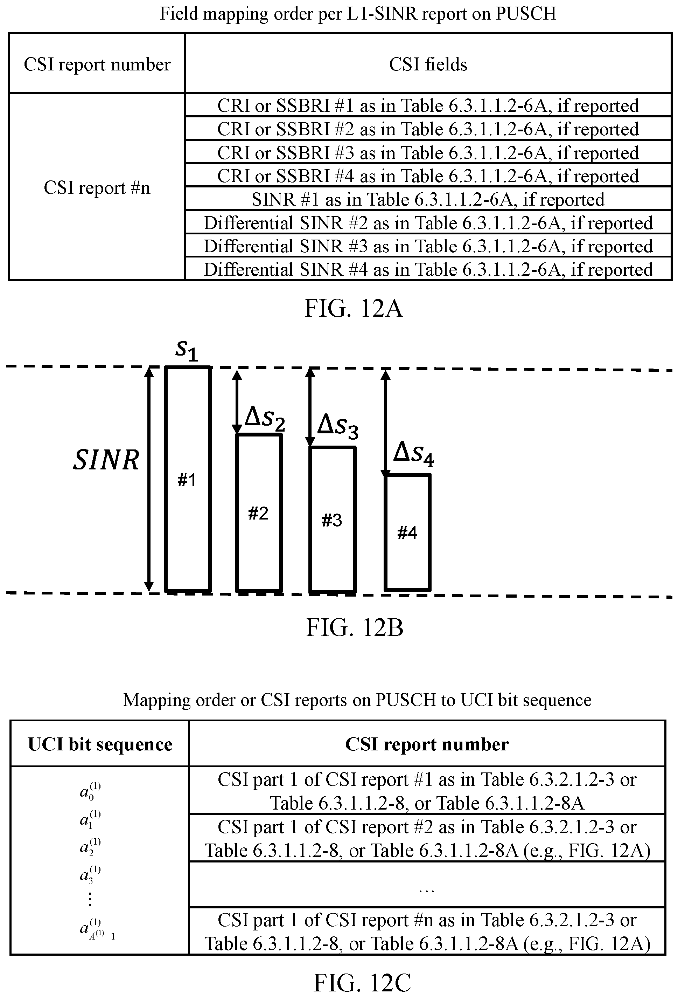

At 1004, the UE determines a field mapping order per physical layer CSI report. For example, the UE may determine a field mapping order for one or more CSI report(s) on PUSCH in accordance with the example table shown in FIG. 12A.

At 1006, the UE transmits the physical layer CSI reports via a PUSCH, with the one or more metrics in CSI fields occurring in accordance with the determined field mapping order.

FIG. 11 illustrates example operations 1100 for wireless communications by a network entity and may be considered complementary to operations 1000 of FIG. 10. For example, operations 1100 may be performed by a gNB scheduling transmissions to a UE 120 performing operations 1000 of FIG. 10.

Operations 1100 begin, at 1102, by receiving, from a UE, one or more physical layer CSI reports with one or more metrics. At 1104, the network entity determining a field mapping order per physical layer CSI report. At 1106, the network entity processes the one or more metrics in CSI fields occurring in accordance with the determined field mapping order.

As noted above, the field mapping order per L1-SINR report on PUSCH may be determined, for example, as shown in the example table of FIG. 12A. As illustrated, the mapping order may depend on how many and what type of CSI metrics are reported (e.g., if one or more values of CRI, SSBRI, or SINR are reported).

As illustrated, in some cases, if more than one SINR value is reported, only one absolute value may be reported (e.g., SINR #1), while differential values may be reported for other reported SINR values. This approach may help keep the payload size of the report from getting too large.

As illustrated in FIG. 12B, in some cases, the first SINR value SINR #1 may always be the largest (e.g., the strongest) SINR, and reported as an absolute value. In such cases, the SINR values (e.g., for SINR #2, SINR #3, and SINR #4 if reported, which each correspond to lower SINR values) are reported as differential SINR values relative to the first (absolute) SINR value.

In some cases, the field mapping order per L1-SINR report on PUSCH reuses the same order when the report is on PUCCH. For example, the field mapping order per L1-SINR report sent on both PUCCH and PUSCH may be as described in a common table.

For CSI on PUSCH, two UCI bit sequences may be generated:

$$a_0^{(1)}, a_1^{(1)}, a_2^{(1)}, a_3^{(1)}, ..., a_{A^{(1)}-1}^{(1)};$$

and

$$a_0^{(2)}, a_1^{(2)}, a_2^{(2)}, a_3^{(2)}, ..., a_{A^{(2)}-1}^{(2)}.$$

In some cases, the first UCI bit sequence is associated with the CSI part 1. The CSI fields of all CSI reports, in the order from upper part to lower part of a table, as shown in FIG. 12C, may be mapped to a single UCI bit sequence, for example, the UCI bit sequence:

$$a_0^{(1)}, a_1^{(1)}, a_2^{(1)}, a_3^{(1)}, ..., a_{A^{(1)}-1}^{(1)},$$

starting with $a_0^{(1)}$.

In some cases, the mapping order of CSI fields of one report for CRI/SINR or SSBRI/SINR reporting is provided in the table shown in FIG. 12A. For example, the table shown by FIG. 12A could be Table 6.3.1.1.2-8A in 3GPP TS 38.212, and the table shown by FIG. 12C can be Table 6.3.2.1.2-6 in 3GPP TS 38.212. The techniques described herein for CSI part 1 may also be applicable for one report for CRI/SINR or SSBRI/SINR reporting. The CSI report for CRI/SINR or SSBRI/SINR reporting is mapped within the CSI part1 when some CSI on PUSCH is reported in two parts.

As described herein, in some cases, each L1-SINR report may only have a single part (e.g., instead of two parts per CSI report). For example, the CSI feedback may consist of a single part when the higher layer parameter reportQuantity is configured with one of the values 'cri-RSRP', 'ssb-Index-RSRP', 'cri-SINR', or 'ssb-Index-SINR'.

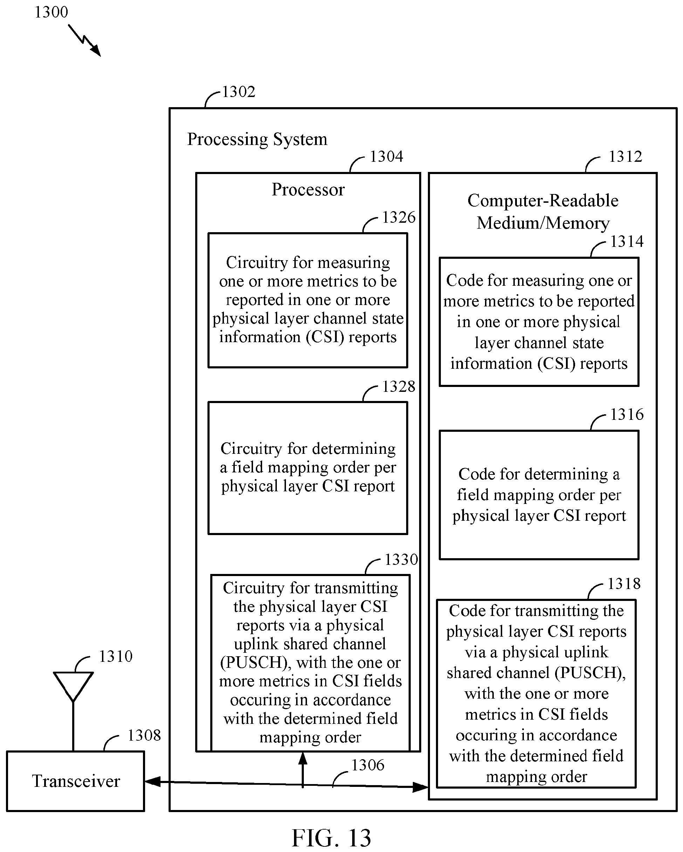

**FIG. 13** illustrates a communications device 1300 that may include various components (e.g., corresponding to means-plus-function components) configured to perform operations for the techniques disclosed herein, such as the operations illustrated in **FIG. 10.** The communications device 1300 includes a processing system 1302 coupled to a transceiver 1308. The transceiver 1308 is configured to transmit and receive signals for the communications device 1300 via an antenna 1310, such as the various signals as described herein. The processing system 1302 may be configured to perform processing functions for the communications device 1300, including processing signals received and/or to be transmitted by the communications device 1300.

The processing system 1302 includes a processor 1304 coupled to a computer-readable medium/memory 1312 via a bus 1306. In certain aspects, the computer-readable medium/memory 1312 is configured to store instructions (e.g., computer-executable code) that when executed by the processor 1304, cause the processor 1304 to perform the operations illustrated in **FIG. 10,** or other operations for performing the various techniques discussed herein. In certain aspects, computer-readable medium/memory 1312 stores code 1314 for measuring one or more metrics to be reported in one or more physical layer channel state information (CSI) reports; code 1316 for determining a field mapping order per physical layer CSI report; and code 1318 for transmitting the physical layer CSI reports via a physical uplink shared channel (PUSCH), with the one or more metrics in CSI fields occurring in accordance with the determined field mapping order. In certain aspects, the processor 1304 has circuitry configured to implement the code stored in the computer-readable medium/memory 1312. The processor 1304 includes circuitry 1326 for measuring one or more metrics to be reported in one or more physical layer channel state information (CSI) reports; circuitry 1328 for determining a field mapping order per physical layer CSI report; and circuitry 1330 for transmitting the physical layer CSI reports via a physical uplink shared channel (PUSCH), with the one or more metrics in CSI fields occurring in accordance with the determined field mapping order.

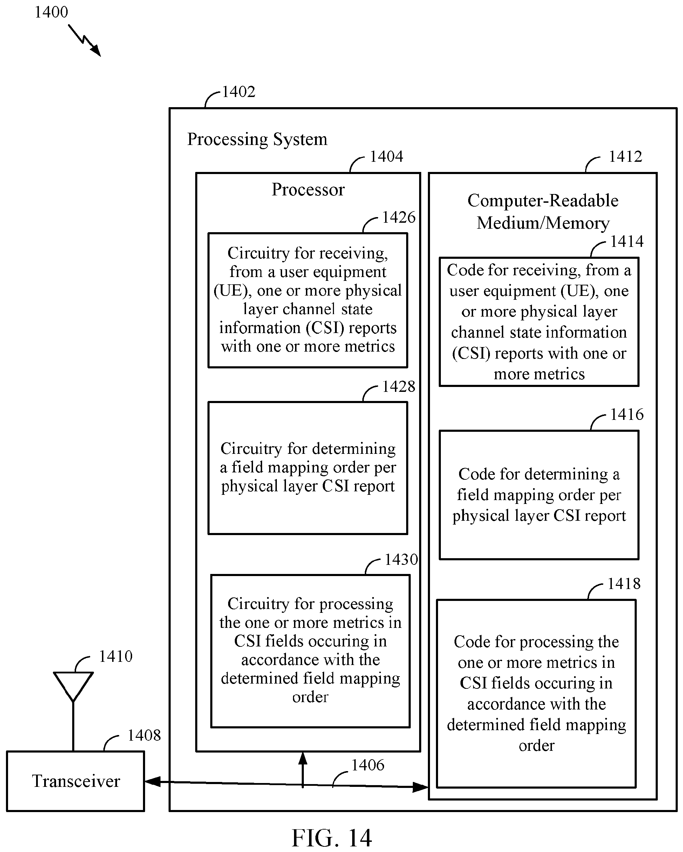

**FIG. 14** illustrates a communications device 1400 that may include various components (e.g., corresponding to means-plus-function components) configured to perform operations for the techniques disclosed herein, such as the operations illustrated in **FIG. 11.** The communications device 1400 includes a processing system 1402 coupled to a transceiver 1408. The transceiver 1408 is configured to transmit and receive signals for the communications device 1400 via an antenna 1410, such as the various signals as described herein. The processing system 1402 may be configured to perform processing functions for the communications device 1400, including processing signals received and/or to be transmitted by the communications device 1400.

The processing system 1402 includes a processor 1404 coupled to a computer-readable medium/-memory 1412 via a bus 1406. In certain aspects, the computer-readable medium/memory 1412 is configured to store instructions (e.g., computer-executable code) that when executed by the processor 1404, cause the processor 1404 to perform the operations illustrated in **FIG. 11,** or other operations for performing the various techniques discussed herein. In certain aspects, computer-readable medium/memory 1412 stores: code 1414 for receiving, from a user equipment (UE), one or more physical layer channel state information (CSI) reports with one or more metrics; code 1416 for determining a field mapping order per physical layer CSI report; and code 1418 for processing the one or more metrics in CSI fields occurring in accordance with the determined field mapping order. In certain aspects, the processor 1404 has circuitry configured to implement the code stored in the computer-readable medium/memory 1412. The processor 1404 includes circuitry 1426 for receiving, from a user equipment (UE), one or more physical layer channel state information (CSI) reports with one or more metrics; circuitry 1428 for determining a field mapping order per physical layer CSI report; and circuitry 1430 for processing the one or more metrics in CSI fields occurring in accordance with the determined field mapping order.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. Moreover, nothing disclosed herein is intended to be dedicated to the public regardless of whether such disclosure is explicitly recited in the claims.

The various operations of methods described above may be performed by any suitable means capable of performing the corresponding functions. The means may include various hardware and/or software component(s) and/or module(s), including, but not limited to a circuit, an application specific integrated circuit (ASIC), or processor. For example, processors 458, 464, 466, and/or controller/processor 480 of the UE 120 and/or processors 420, 430, 438, and/or controller/processor 440 of the BS 110 shown in **FIG. 4** may be configured to perform operations 1000 of **FIG. 10** and/or operations 1100 of **FIG. 11.**

Means for receiving may include a receiver (such as one or more antennas or receive processors) illustrated in **FIG. 4.** Means for transmitting may include a transmitter (such as one or more antennas or transmit processors) illustrated in **FIG. 4.** Means for determining, means for processing, means for treating, and means for applying may include a processing system, which may include one or more processors, such as processors 458, 464, 466, and/or controller/processor 480 of the UE 120 and/or processors 420, 430, 438, and/or controller/processor 440 of the BS 110 shown in **FIG. 4.**

In some cases, rather than actually transmitting a frame a device may have an interface to output a frame for transmission (a means for outputting). For example, a processor may output a frame, via a bus interface, to a radio frequency (RF) front end for transmission. Similarly, rather than actually receiving a frame, a device may have an interface to obtain a frame received from another device (a means for obtaining). For example, a processor may obtain (or receive) a frame, via a bus interface, from an RF front end for reception.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see **FIG. 1**), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For example, instructions for performing the operations described herein and illustrated in **FIGs. 10-11.**

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

**Claims**

1. A method for wireless communications by a user equipment, UE (120), comprising:

   measuring (1002) one or more metrics to be reported in one or more physical layer channel state information, CSI, reports, wherein each physical layer CSI report has a single part;
   determining (1004) a field mapping order per physical layer CSI report, wherein the field mapping order is the same as a field mapping order used for physical layer CSI of reports transmitted via a physical uplink control channel, PUCCH; and
   transmitting (1006) the physical layer CSI reports via a physical uplink shared channel, PUSCH, with the one or more metrics in CSI fields occurring in accordance with the determined field mapping order.

2. The method of claim 1, wherein the field mapping order is based on a table associated with the one or more metrics.

3. The method of claim 1, wherein the one or more metrics comprise at least one of:

a CSI reference signal, CSI-RS, resource indicator, CRI;
a synchronization signal/physical broadcast channel, SS/PBCH, resource block indicator, SSBRI; or
a signal to interference and noise ratio, SINR.

4. The method of claim 3, wherein the field mapping order is based on:

a quantity of the one or more metrics measured; and
which of the one or more metrics are measured.

5. The method of claim 3, wherein:

the field mapping order dictates that, after an absolute SINR value occurs, one or more differential SINR values occur; and
the one or more differential SINR values are relative to the absolute SINR value.

6. The method of claim 5, wherein the absolute SINR value is a strongest SINR value of two or more SINR values, and the other SINR values of the two or more SINR values are represented by the one or more differential SINR values.

7. The method of claim 1, wherein the CSI fields of the physical layer CSI reports are mapped to a single uplink control information, UCI, bit sequence.

8. The method of claim 1, wherein:

the single part is associated with a first uplink control information, UCI, bit sequence of at least two UCI bit sequences; or
each physical layer CSI report has a single part when a higher layer report quantity parameter is configured with one of the values: 'cri-RSRP', 'ssb-Index-RSRP', 'cri-SINR', or 'ssb-Index-SINR'.

9. A method for wireless communications by a network entity, comprising:

receiving (1102), from a user equipment, UE, (120) one or more physical layer channel state information, CSI, reports with one or more metrics via a physical uplink shared channel, PUSCH, wherein each physical layer CSI report has a single part;
determining (1104) a field mapping order per physical layer CSI report, wherein the field mapping order is the same as a field mapping order used for physical layer CSI reports transmitted via a physical uplink control channel, PUCCH; and
processing (1106) the one or more metrics in CSI fields occurring in accordance with the determined field mapping order.

10. The method of claim 9, wherein the field mapping order is based on a table associated with the one or more metrics.

11. The method of claim 10, wherein the one or more metrics comprise at least one of:

a CSI reference signal, CSI-RS, resource indicator, CRI;
a synchronization signal/physical broadcast channel, SS/PBCH, resource block indicator, SSBRI; or
a signal to interference and noise ratio, SINR.

12. An apparatus for wireless communications by a user equipment, UE (120), comprising:

at least one processor (1304) configured to measure one or more metrics to be reported in one or more physical layer channel state information, CSI, reports, wherein each physical layer CSI report has a single part, and determine a field mapping order per physical layer CSI report, wherein the field mapping order is the same as a field mapping order used for physical layer CSI reports transmitted via a physical uplink control channel, PUCCH; and
a transmitter (1308) configured to transmit the physical layer CSI reports via a physical uplink shared channel, PUSCH, with the one or more metrics in CSI fields occurring in accordance with the determined field mapping order.

13. An apparatus for wireless communications by a network entity, comprising:

at least one receiver (1408) configured to receive, from a user equipment, UE, one or more physical layer channel state information, CSI, reports with one or more metrics via a physical uplink shared channel, PUSCH, wherein each physical layer CSI report has a single part,
at least one processor (1404) configured to determine a field mapping order per physical layer CSI report, of wherein the field mapping order is the same as a field mapping order used for physical layer CSI reports transmitted via a physical uplink control channel, PUCCH; and
process the one or more metrics in CSI fields occurring in accordance with the determined field mapping order.

## Patentansprüche

1. Ein Verfahren zur drahtlosen Kommunikation durch ein Benutzergerät, UE, (120), das Folgendes aufweist:

   Messen (1002) einer oder mehrerer in einer oder mehreren Bitübertragungsschicht-Kanalstatusinformations-Meldungen, Bitübertragungsschicht-CSI-Meldungen, zu meldender Metriken, wobei jede Bitübertragungsschicht-CSI-Meldung einen einzigen Teil aufweist;
   Bestimmen (1004) einer Feldzuordnungsreihenfolge pro Bitübertragungsschicht-CSI-Meldung, wobei die Feldzuordnungsreihenfolge die gleiche wie eine Feldzuordnungsreihenfolge ist, die für über einen physischen Uplink-Steuerkanal, PUCCH, gesendete Bitübertragungsschicht-CSI-Meldungen verwendet wird; und
   Senden (1006) der Bitübertragungsschicht-CSI-Meldungen mit der einen oder den mehreren Metriken in entsprechend der bestimmten Feldzuordnungsreihenfolge auftretenden CSI-Feldern über einen physischen Uplink-Gemeinschaftskanal, PUSCH.

2. Verfahren nach Anspruch 1, wobei die Feldzuordnungsreihenfolge auf einer der einen oder den mehreren Metriken zugeordneten Tabelle basiert.

3. Verfahren nach Anspruch 1, wobei die eine oder die mehreren Metriken zumindest eines unter Folgendem aufweisen:

   einen CSI-Referenzsignal-Ressourcenindikator, CSI-RS-Ressourcenindikator, CRI;
   einen Synchronisationssignal-/physischen Broadcast-Kanal-Ressourcenblockindikator, SS/PBCH-Ressourcenblockindikator, SSBRI; oder
   ein Signal-Interferenz- und Rauschverhältnis, SINR.

4. Verfahren nach Anspruch 3, wobei die Feldzuordnungsreihenfolge auf Folgendem basiert:

   einer Anzahl der einen oder der mehreren gemessenen Metriken; und
   welche der einen oder der mehreren Metriken gemessen werden.

5. Verfahren nach Anspruch 3, wobei:

   die Feldzuordnungsreihenfolge vorgibt, dass nach dem Auftreten eines absoluten SINR-Werts ein oder mehrere differentielle SINR-Werte auftreten; und
   der eine oder die mehreren differentiellen SINR-Werte relativ zu dem absoluten SINR-Wert sind.

6. Verfahren nach Anspruch 5, wobei der absolute SINR-Wert ein stärkster SINR-Wert unter zwei oder mehr SINR-Werten ist und die anderen SINR-Werte unter den zwei oder mehr SINR-Werten durch den einen oder die mehreren differentiellen SINR-Werte repräsentiert werden.

7. Verfahren nach Anspruch 1, wobei die CSI-Felder der Bitübertragungsschicht-CSI-Meldungen einer einzigen Uplink-Steuerinformations-Bitsequenz, UCI-Bitsequenz, zugeordnet sind.

8. Verfahren nach Anspruch 1, wobei:

   der einzige Teil einer ersten Uplink-Steuerinformations-Bitsequenz, UCI-Bitsequenz, unter mindestens zwei UCI-Bitsequenzen zugeordnet ist; oder
   jede Bitübertragungsschicht-CSI-Meldung einen einzigen Teil aufweist, wenn ein übergeordneter Meldungsanzahlparameter mit einem der folgenden Werte konfiguriert ist: ‚cri-RSRP', ‚ssb-Index-RSRP', ‚cri-SINR' oder ‚ssb-Index-SINR'.

9. Ein Verfahren zur drahtlosen Kommunikation durch eine Netzwerkentität, das Folgendes aufweist:

   Empfangen (1102) einer oder mehrerer Bitübertragungsschicht-Kanalstatusinformations-Meldungen, Bitübertragungsschicht-CSI-Meldungen, mit einer oder mehreren Metriken von einem Benutzergerät, UE, (120) über einen physischen Uplink-Gemeinschaftskanal, PUSCH, wobei jede Bitübertragungsschicht-CSI-Meldung einen einzigen Teil aufweist;
   Bestimmen (1104) einer Feldzuordnungsreihenfolge pro Bitübertragungsschicht-CSI-Meldung, wobei die Feldzuordnungsreihenfolge die gleiche wie eine Feldzuordnungsreihenfolge ist, die für über eine physischen Uplink-Steuerkanal, PUCCH, gesendete Bitübertragungsschicht-CSI-Meldungen verwendet wird; und
   Verarbeiten (1106) der einen oder der mehreren Metriken in CSI-Feldern, die entsprechend der bestimmten Feldzuordnungsreihenfolge auftreten.

10. Verfahren nach Anspruch 9, wobei die Feldzuordnungsreihenfolge auf einer der einen oder den mehreren Metriken zugeordneten Tabelle basiert.

**11.** Verfahren nach Anspruch 10, wobei die eine oder die mehreren Metriken zumindest eines unter Folgendem aufweisen:

einen CSI-Referenzsignal-Ressourcenindikator, CSI-RS-Ressourcenindikator, CRI;
einen Synchronisationssignal-/physischen Broadcast-Kanal-Ressourcenblockindikator, SS/PBCH-Ressourcenblockindikator, SSBRI; oder
ein Signal-Interferenz- und Rauschverhältnis, SINR.

**12.** Eine Vorrichtung zur drahtlosen Kommunikation durch ein Benutzergerät, UE (120), die Folgendes aufweist:

mindestens einen Prozessor (1304), der darauf ausgelegt ist, eine oder mehrere in einer oder mehreren Bitübertragungsschicht-Kanalstatusinformations-Meldungen, Bitübertragungsschicht-CSI-Meldungen, zu meldende Metriken zu messen, wobei jede Bitübertragungsschicht-CSI-Meldung einen einzigen Teil aufweist, und eine Feldzuordnungsreihenfolge pro Bitübertragungsschicht-CSI-Meldung zu bestimmen, wobei die Feldzuordnungsreihenfolge die gleiche wie eine Feldzuordnungsreihenfolge ist, die für über einen physischen Uplink-Steuerkanal, PUCCH, gesendete Bitübertragungsschicht-CSI-Meldungen verwendet wird; und
einen Sender (1308), der darauf ausgelegt ist, die Bitübertragungsschicht-CSI-Meldungen mit der einen oder den mehreren Metriken in CSI-Feldern, die entsprechend der bestimmten Feldzuordnungsreihenfolge auftreten, über einen physischen Uplink-Gemeinschaftskanal, PUSCH, zu senden.

**13.** Eine Vorrichtung zur drahtlosen Kommunikation durch eine Netzwerkentität, die Folgendes aufweist:

mindestens einen Empfänger (1408), der darauf ausgelegt ist, von einem Benutzergerät, UE, über einen physischen Uplink-Gemeinschaftskanal, PUSCH, eine oder mehrere Bitübertragungsschicht-Kanalstatusinformations-Meldungen, Bitübertragungsschicht-CSI-Meldungen mit einer oder mehreren Metriken zu empfangen, wobei jede Bitübertragungsschicht-CSI-Meldung einen einzigen Teil aufweist, mindestens einen Prozessor (1404), der darauf ausgelegt ist, eine Feldzuordnungsreihenfolge pro Bitübertragungsschicht-CSI-Meldung zu bestimmen, wobei die Feldzuordnungsreihenfolge die gleiche wie eine Feldzuordnungsreihenfolge ist, die für über einen physischen Uplink-Steuerkanal, PUCCH, gesendete Bitübertragungsschicht-CSI-Meldungen verwendet wird; und die eine oder die mehreren Metriken in entsprechend der bestimmten Feldzuordnungsreihenfolge auftretenden CSI-Feldern zu verarbeiten.

**Revendications**

**1.** Procédé de communication sans fil par un équipement d'utilisateur, UE, (120), comprenant les étapes consistant à :

mesurer (1002) un ou plusieurs indicateurs métriques à signaler dans un ou plusieurs rapports d'informations d'état de canal, CSI, de couche physique, chaque rapport CSI de couche physique comportant une seule partie ;
déterminer (1004) un ordre de mise en correspondance de champs par rapport CSI de couche physique, l'ordre de mise en correspondance de champs étant le même qu'un ordre de mise en correspondance de champs utilisé pour des rapports CSI de couche physique émis par l'intermédiaire d'un canal physique de commande en liaison montante, PUCCH ; et
émettre (1006) les rapports CSI de couche physique par l'intermédiaire d'un canal physique partagé en liaison montante, PUSCH, avec les un ou plusieurs indicateurs métriques dans des champs CSI apparaissant selon l'ordre de mise en correspondance de champs déterminé.

**2.** Procédé selon la revendication 1, l'ordre de mise en correspondance de champs étant basé sur un tableau associé aux un ou plusieurs indicateurs métriques.

**3.** Procédé selon la revendication 1, les un ou plusieurs indicateurs métriques comprenant au moins un élément parmi :

un indicateur de ressource de signal de référence de CSI, CSI-RS, CRI ;
un indicateur de bloc de ressources de signaux de synchronisation/canaux physiques de diffusion, SS/PBCH, SSBRI ; ou
un rapport signal-brouillage plus bruit, SINR.

**4.** Procédé selon la revendication 3, l'ordre de mise en concordance de champs étant basé sur :

un nombre des un ou plusieurs indicateurs métriques mesurés ; et
quels indicateurs métriques sont mesurés parmi les un ou plusieurs indicateurs métriques.

**5.** Procédé selon la revendication 3,

l'ordre de mise en correspondance de champs stipulant qu'après l'apparition d'une valeur SINR absolue, une ou plusieurs valeurs SINR différentielles apparaissent ; et les une ou plusieurs valeurs SINR différentielles étant relatives à la valeur SINR absolue.

6. Procédé selon la revendication 5, la valeur SINR absolue étant une valeur SINR la plus forte parmi deux valeurs SINR ou plus, et les autres valeurs SINR parmi les deux valeurs SINR ou plus étant représentées par les uns ou plusieurs valeurs SINR différentielles.

7. Procédé selon la revendication 1, les champs CSI des rapports CSI de couche physique étant mis en correspondance avec une seule séquence de bits d'informations de commande en liaison montante, UCI.

8. Procédé selon la revendication 1,

la seule partie étant associée à une première séquence de bits d'informations de commande en liaison montante, UCI, parmi au moins deux séquences de bits UCI; ou
chaque rapport CSI de couche physique comportant une seule partie lorsqu'un paramètre de nombre de rapports de couche supérieure est configuré avec l'une des valeurs suivantes : « cri-RSRP », « ssb-Index-RSRP », « cri-SINR » ou « ssb-Index-SINR ».

9. Procédé de communication sans fil par une entité de réseau, comprenant les étapes consistant à :

recevoir (1102), en provenance d'un équipement d'utilisateur, UE, (120), un ou plusieurs rapports d'informations d'état de canal, CSI, de couche physique avec un ou plusieurs indicateurs métriques par l'intermédiaire d'un canal physique partagé en liaison montante, PUSCH, chaque rapport CSI de couche physique comportant une seule partie ;
déterminer (1104) un ordre de mise en correspondance de champs par rapport CSI de couche physique, l'ordre de mise en correspondance de champs étant le même qu'un ordre de mise en correspondance de champs utilisé pour des rapports CSI de couche physique émis par l'intermédiaire d'un canal physique de commande en liaison montante, PUCCH ; et
traiter (1106) les un ou plusieurs indicateurs métriques dans des champs CSI apparaissant selon l'ordre de mise en correspondance de champs déterminé.

10. Procédé selon la revendication 9, l'ordre de mise en correspondance de champs étant basé sur un tableau associé aux un ou plusieurs indicateurs métriques.

11. Procédé selon la revendication 10, les un ou plusieurs indicateurs métriques comprenant au moins un élément parmi :

un indicateur de ressource de signal de référence de CSI, CSI-RS, CRI ;
un indicateur de bloc de ressources de signaux de synchronisation/canaux physiques de diffusion, SS/PBCH, SSBRI ; ou
un rapport signal-brouillage plus bruit, SINR.

12. Appareil pour une communication sans fil par un équipement d'utilisateur, UE (120), comprenant :

au moins un processeur (1304), configuré pour mesurer un ou plusieurs indicateurs métriques à signaler dans un ou plusieurs rapports d'informations d'état de canal, CSI, de couche physique, chaque rapport CSI de couche physique comportant une seule partie, et déterminer un ordre de mise en correspondance de champs par rapport CSI de couche physique, l'ordre de mise en correspondance de champs étant le même qu'un ordre de mise en correspondance de champs utilisé pour des rapports CSI de couche physique émis par l'intermédiaire d'un canal physique de commande en liaison montante, PUCCH ; et
un émetteur (1308), configuré pour émettre les rapports CSI de couche physique par l'intermédiaire d'un canal physique partagé en liaison montante, PUSCH, avec les un ou plusieurs indicateurs métriques dans des champs CSI apparaissant selon l'ordre de mise en correspondance de champs déterminé.

13. Appareil de communication sans fil par une entité de réseau, comprenant :

au moins un récepteur (1408), configuré pour recevoir, en provenance d'un équipement d'utilisateur, UE, un ou plusieurs rapports d'informations d'état de canal, CSI, de couche physique avec un ou plusieurs indicateurs métriques par l'intermédiaire d'un canal physique partagé en liaison montante, PUSCH, chaque rapport CSI de couche physique comportant une seule partie ;
au moins un processeur (1404), configuré pour déterminer un ordre de mise en correspondance de champs par rapport CSI de couche physique, l'ordre de mise en correspondance de champs étant le même qu'un ordre de mise en correspondance de champs utilisé pour des rapports CSI de couche physique émis par l'intermédiaire d'un canal physique de commande en liaison montante, PUCCH, et

traiter les un ou plusieurs indicateurs métriques dans des champs CSI apparaissant selon l'ordre de mise en correspondance de champs déterminé.

FIG. 1

EP 4 147 411 B1

FIG. 2

FIG. 3

FIG. 4

500

505-a

CU
510
RRC

515
PDCP

DU
520
RLC

525
MAC

530
PHY

505-b

AN
510
RRC

515
PDCP

520
RLC

525
MAC

530
PHY

505-c

UE
510
RRC

515
PDCP

520
RLC

525
MAC

530
PHY

FIG. 5

FIG. 6

EP 4 147 411 B1

FIG. 7

frequency

SS/PBCH
Block

802

CORESET

804

PDSCH

806

800

time

Pattern 1

FIG. 8

P-TRS → AP-TRS Type-A/D

SSB → P-TRS Type-C/D

P-TRS → PDCCH Type-A/D

P-TRS → PDSCH Type-A/D

SSB, CSIRS-BM → P-TRS Type-C, Type-D

FIG. 9

1000

1002

```
MEASURE ONE OR MORE METRICS TO BE REPORTED IN ONE OR
MORE PHYSICAL LAYER CHANNEL STATE INFORMATION (CSI)
REPORTS
```

1004

```
DETERMINE A FIELD MAPPING ORDER PER PHYSICAL LAYER CSI
REPORT
```

1006

```
TRANSMIT THE PHYSICAL LAYER CSI REPORTS VIA A PHYSICAL
UPLINK SHARED CHANNEL (PUSCH), WITH THE ONE OR MORE
METRICS IN CSI FIELDS OCCURING IN ACCORDANCE WITH THE
DETERMINED FIELD MAPPING ORDER
```

FIG. 10

1100

1102

RECEIVE, FROM A USER EQUIPMENT (UE), ONE OR MORE PHYSICAL LAYER CHANNEL STATE INFORMATION (CSI) REPORTS WITH ONE OR MORE METRICS

1104

DETERMINE A FIELD MAPPING ORDER PER PHYSICAL LAYER CSI REPORT

1106

PROCESS THE ONE OR MORE METRICS IN CSI FIELDS OCCURING IN ACCORDANCE WITH THE DETERMINED FIELD MAPPING ORDER

FIG. 11

Field mapping order per L1-SINR report on PUSCH

| CSI report number | CSI fields |
|---|---|
| CSI report #n | CRI or SSBRI #1 as in Table 6.3.1.1.2-6A, if reported |
| | CRI or SSBRI #2 as in Table 6.3.1.1.2-6A, if reported |
| | CRI or SSBRI #3 as in Table 6.3.1.1.2-6A, if reported |
| | CRI or SSBRI #4 as in Table 6.3.1.1.2-6A, if reported |
| | SINR #1 as in Table 6.3.1.1.2-6A, if reported |
| | Differential SINR #2 as in Table 6.3.1.1.2-6A, if reported |
| | Differential SINR #3 as in Table 6.3.1.1.2-6A, if reported |
| | Differential SINR #4 as in Table 6.3.1.1.2-6A, if reported |

FIG. 12A

FIG. 12B

Mapping order or CSI reports on PUSCH to UCI bit sequence

| UCI bit sequence | CSI report number |
|---|---|
| $a_0^{(1)}$ $a_1^{(1)}$ $a_2^{(1)}$ $a_3^{(1)}$ $\vdots$ $a_{A^{(1)}-1}^{(1)}$ | CSI part 1 of CSI report #1 as in Table 6.3.2.1.2-3 or Table 6.3.1.1.2-8, or Table 6.3.1.1.2-8A |
| | CSI part 1 of CSI report #2 as in Table 6.3.2.1.2-3 or Table 6.3.1.1.2-8, or Table 6.3.1.1.2-8A (e.g., FIG. 12A) |
| | ... |
| | CSI part 1 of CSI report #n as in Table 6.3.2.1.2-3 or Table 6.3.1.1.2-8, or Table 6.3.1.1.2-8A (e.g., FIG. 12A) |

FIG. 12C

1300

1302

Processing System

1304

1312

Processor

Computer-Readable
Medium/Memory

1326

1314

Circuitry for measuring
one or more metrics to be
reported in one or more
physical layer channel state
information (CSI) reports

Code for measuring one or
more metrics to be reported
in one or more physical
layer channel state
information (CSI) reports

1328

1316

Circuitry for determining
a field mapping order per
physical layer CSI report

Code for determining a
field mapping order per
physical layer CSI report

1330

1318

Circuitry for transmitting
the physical layer CSI
reports via a physical
uplink shared channel
(PUSCH), with the one or
more metrics in CSI fields
occuring in accordance
with the determined field
mapping order

Code for transmitting the
physical layer CSI reports
via a physical uplink
shared channel (PUSCH),
with the one or more
metrics in CSI fields
occuring in accordance
with the determined field
mapping order

1310

1308

1306

Transceiver

FIG. 13

1400

1402

Processing System

1404

Processor

1426

Circuitry for receiving, from a user equipment (UE), one or more physical layer channel state information (CSI) reports with one or more metrics

1428

Circuitry for determining a field mapping order per physical layer CSI report

1430

Circuitry for processing the one or more metrics in CSI fields occuring in accordance with the determined field mapping order

1412

Computer-Readable Medium/Memory

1414

Code for receiving, from a user equipment (UE), one or more physical layer channel state information (CSI) reports with one or more metrics

1416

Code for determining a field mapping order per physical layer CSI report

1418

Code for processing the one or more metrics in CSI fields occuring in accordance with the determined field mapping order

1410

1408

Transceiver

1406

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020089417 W